# FASCICULE DE BREVET EUROPEEN

(11) **EP 3 517 444 B1**
(45) Date de publication et mention de la délivrance du brevet: **13.05.2020**
(21) Numéro de dépôt: 18212157.4
(22) Date de dépôt: 13.12.2018
(51) Int. Cl.: B64D 27/26, B64D 27/18, B64D 29/02, B64D 13/08, B64D 33/02, B64D 33/10, F02C 6/08, F02C 7/18, F28D 21/00

(54) **MÂT D'AERONEF COMPRENANT UN ECHANGEUR THERMIQUE COAXIAL**
MAST EINES LUFTFAHRZEUGS, DER EINEN KOAXIALEN WÄRMETAUSCHER UMFASST
AIRCRAFT MAST INCLUDING A COAXIAL HEAT EXCHANGER

(30) Priorité: 24.01.2018 FR 1850565
(43) Date de publication de la demande: 31.07.2019
(73) Titulaire: Airbus Operations (S.A.S.), 31060 Toulouse (FR)
(72) Inventeur: SOULIE, Adeline, 82600 Verdun-sur-Garonne (FR); GELIOT, Jean, 31400 Toulouse (FR)
(74) Mandataire: Gicquel, Olivier Yves Gérard

(56) Documents cités:
- EP-A1- 1 365 203
- WO-A1-2018/002855
- WO-A2-2007/012725
- FR-A1- 2 734 319
- EL MAAKOUL ANAS ET AL: "Numerical investigation of thermohydraulic performance of air to water double-pipe heat exchanger with helical fins", APPLIED THERMAL ENGINEERING, PERGAMON, OXFORD, GB, vol. 127, 7 août 2017 (2017-08-07), pages 127-139, XP085209061, ISSN: 1359-4311, DOI: 10.1016/J.APPLTHERMALENG.2017.08.024

## Description

La présente invention se rapporte à un mât d'aéronef comprenant un échangeur thermique coaxial.

Selon une configuration, un aéronef 10 comprend plusieurs ensembles moteurs 12 positionnés sous la voilure 14.

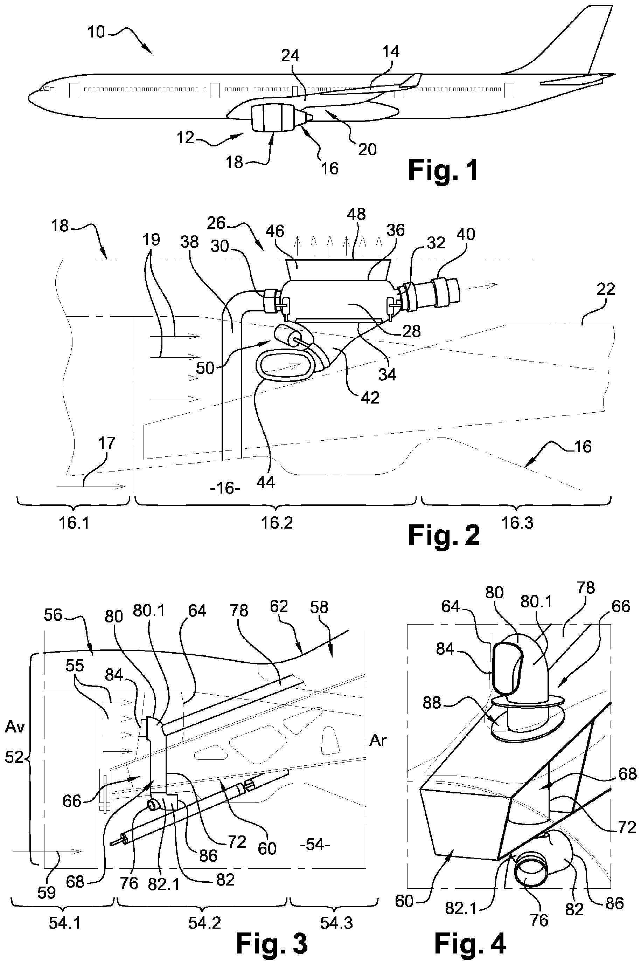

Comme illustré sur les figures 1 et 2, un ensemble moteur 12 comprend :
- un moteur 16 dans lequel circule un flux primaire d'air,
- une nacelle 18 positionnée autour du moteur 16 de manière à délimiter avec ce dernier un conduit annulaire dans lequel s'écoule un flux secondaire 19 d'air froid, et
- un mât 20 qui assure la liaison entre le moteur 16 et la voilure 14.

Le moteur 16 comprend, selon le sens d'écoulement du flux primaire matérialisé par la flèche 17, un carter de soufflante 16.1 de grande dimension délimitant un canal annulaire de soufflante, un carter central 16.2 de plus petite dimension renfermant la zone « core » du moteur 16 traversé par le flux primaire, et un carter d'éjection 16.3 de plus grande dimension via lequel est éjecté le flux primaire.

Le mât 20 comprend une structure primaire 22 rigide, qui assure entre autres la transmission des efforts entre le moteur 16 et le reste de l'aéronef 10, et une structure secondaire 24 qui enveloppe la structure primaire 22 et qui limite la traînée du mât 20.

Comme illustré sur la figure 2, chaque ensemble moteur 12 comprend au moins un dispositif d'échange thermique 26 configuré pour refroidir de l'air chaud prélevé au niveau des étages de compression du moteur 16 et destiné aux systèmes de climatisation et de pressurisation de l'aéronef et/ou de dégivrage de la voilure.

Selon un mode de réalisation, chaque dispositif d'échange thermique 26 comprend :
- un échangeur thermique 28 qui a une forme parallélépipédique et qui présente un premier circuit d'air chaud reliant une première entrée 30 et une première sortie 32 ainsi qu'un deuxième circuit d'air froid reliant une deuxième entrée 34 et une deuxième sortie 36,
- un conduit d'alimentation en air chaud 38 qui est configuré pour prélever de l'air chaud au niveau du moteur 16, qui traverse la structure primaire 22 du mât et qui est connecté à la première entrée 30,
- un conduit de sortie d'air chaud 40 connecté à la première sortie 32,
- un conduit d'alimentation en air froid 42 connecté à la deuxième entrée 34, qui débouche dans le flux secondaire 19 via une écope 44 positionnée sous l'échangeur thermique 28 et configurée pour prélever de l'air froid dans le flux secondaire 19,
- un conduit d'échappement 46 connecté à la deuxième sortie 36, qui débouche via une grille 48 prévue au niveau de la structure secondaire 24 du mât, positionnée au-dessus de l'échangeur thermique 28 et qui est configurée pour rejeter de l'air à l'extérieur de l'aéronef.

Pour réguler la température de l'air chaud, le dispositif d'échange thermique 26 comprend un système de régulation 50 configuré pour ajuster le débit de l'air froid et positionné en amont de l'échangeur thermique 28, au niveau du conduit d'alimentation en air froid 42.

Selon une configuration connue, l'échangeur thermique 28 est un échangeur à plaques, positionné dans une zone située au-dessus de la structure primaire 22 et dans la structure secondaire 24 du mât.

Les moteurs des aéronefs ayant des diamètres de plus en plus gros et étant positionnés au plus près de la voilure pour améliorer les performances aérodynamiques et pour conserver une garde au sol minimale, la zone située au-dessus de la structure primaire 22 et au-dessous de la structure secondaire 24 du mât est de plus en plus restreinte ce qui tend à complexifier l'intégration du dispositif d'échange thermique 26.

Le document WO2007/012725 décrit un échangeur positionné au-dessus de la structure primaire du mât, qui comprend un conduit d'évacuation de l'air froid et un conduit d'alimentation en air chaud qui traversent la structure primaire du mât et qui sont coaxiaux. Le fait que l'échangeur thermique soit de type coaxial diminue l'impact de son intégration sur les formes aérodynamiques du carénage de la structure secondaire est limité.

La présente invention vise à améliorer davantage l'intégration d'un dispositif d'échange thermique.

A cet effet, l'invention a pour objet un mât d'aéronef selon la revendication 1. La fonction de surface d'échange thermique réalisée par la cloison entre le conduit d'alimentation en air chaud et le conduit d'évacuation de l'air froid permet de supprimer l'échangeur positionné au-dessus de la structure primaire du mât.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue d'un dispositif d'échange thermique qui illustre un mode de réalisation de l'art antérieur,
- La figure 3 est une vue latérale partielle d'un ensemble moteur qui illustre un mode de réalisation de l'invention,
- La figure 4 est une vue en perspective d'une pointe avant d'une structure primaire d'un mât d'aéronef intégrant un dispositif d'échange thermique qui illustre un mode de réalisation de l'invention,
- La figure 5 est une vue latérale d'un dispositif d'échange thermique qui illustre un mode de réalisation de l'invention,
- La figure 6 est une section selon la ligne VI-VI de la figure 5
- La figure 7 est une vue en perspective d'une partie supérieure d'un échangeur thermique équipé d'un système de régulation qui illustre un mode de réalisation de l'invention,
- Les figures 8A et 8B sont des vues de dessus du système de régulation visible sur la figure 7 respectivement à l'état fermé et à l'état totalement ouvert.

Sur la figure 3, on a représenté un ensemble moteur 52 qui comprend :
- un moteur 54 comportant une zone appelée zone « core » dans le langage aéronautique (ou cœur en français), dans laquelle circule un flux primaire d'air,
- une nacelle 56 positionnée autour du moteur 54 de manière à délimiter avec ce dernier un conduit annulaire dans lequel s'écoule un flux secondaire 55 d'air froid, et
- un mât 58 qui assure la liaison entre le moteur 56 et une voilure d'un aéronef.

Le moteur 54 comprend, selon le sens d'écoulement du flux primaire matérialisé par la flèche 59, un carter de soufflante 54.1 de grande dimension délimitant un canal annulaire de soufflante, un carter central 54.2 de plus petite dimension renfermant la zone « core » du moteur 54 traversé par le flux primaire, et un carter d'éjection 54.3 de plus grande dimension via lequel est éjecté le flux primaire.

Le mât 58 comprend une structure primaire 60 rigide, qui assure entre autres la transmission des efforts entre le moteur 54 et le reste de l'aéronef, et une structure secondaire 62, qui supporte au moins un carénage, qui enveloppe la structure primaire 60 à l'extérieur de la nacelle 56 et qui limite la traînée du mât 58.

Entre le moteur 54 et la nacelle 56, la structure primaire 60 du mât est positionnée dans une bifurcation 64 (représentés transparente sur la figure 4) qui présente un carénage aérodynamique enveloppant la structure primaire 60 dans le flux secondaire 55 afin de réduire les perturbations sur le flux secondaire 55.

Tous ces éléments de l'ensemble moteur ne sont pas plus décrits car ils peuvent être identiques à ceux de l'art antérieur.

Pour la suite de la description, les termes avant et arrière font référence au sens d'écoulement des flux d'air à l'intérieur du moteur 54 qui pénètrent à l'avant Av du moteur 54 et qui sortent à l'arrière Ar du moteur 54.

Au moins un ensemble moteur 52 comprend au moins un dispositif d'échange thermique 66 configuré pour refroidir de l'air chaud prélevé au niveau des étages de compression du moteur 54 et destiné aux systèmes de climatisation et de pressurisation de l'aéronef, de dégivrage de la voilure et/ou à tout autre système de l'aéronef.

Selon un mode de réalisation visible sur les figures 3 à 5 et 7, chaque dispositif d'échange thermique 66 comprend un échangeur thermique 68 qui a une forme tubulaire, qui traverse la structure primaire 60 du mât et qui est positionné au moins partiellement à l'intérieur de la structure primaire 60 du mât.

Selon une configuration privilégiée, la forme tubulaire de l'échangeur thermique 68 présente un axe A68 orienté approximativement à la verticale. En variante, l'axe A68 peut être positionné dans un plan passant par l'axe moteur et vertical, appelé par la suite plan médian vertical PMV, et être plus ou moins incliné vers l'avant ou vers l'arrière.

L'échangeur thermique 68 comprend un premier tronçon de circuit 70 d'air chaud et un deuxième tronçon de circuit 72 d'air froid, les premier et deuxième tronçons de circuit 70 et 72 étant coaxiaux et séparés par au moins une cloison 74 favorisant les échanges thermiques, notamment par conduction, entre l'air chaud circulant dans le premier tronçon de circuit 70 et l'air froid circulant dans le deuxième tronçon de circuit 72.

Selon une configuration, le premier tronçon de circuit 70 est positionné à l'intérieur du deuxième tronçon de circuit 72. Ainsi, l'air froid canalisé à l'extérieur du premier tronçon de circuit 70, dans le deuxième tronçon de circuit 72, forme une barrière thermique protégeant la structure primaire 60 des températures élevées de l'air chaud.

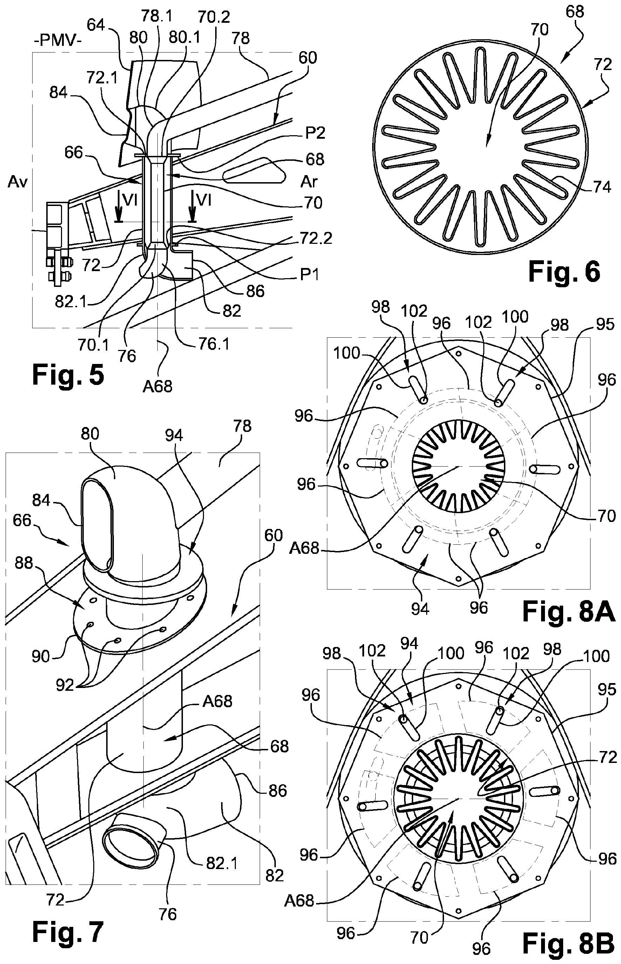

Selon un mode de réalisation visible sur la figure 6, le deuxième tronçon de circuit 72 est cylindrique et coaxial à l'axe A68. Le premier tronçon de circuit 70 a une section, dans un plan perpendiculaire à l'axe A68, étoilée pour augmenter la surface d'échange de la cloison 74. Bien entendu, l'invention n'est pas limitée à ce mode de réalisation pour la section du premier tronçon de circuit 70. En complément ou en alternative, la cloison 74 présente des surfaces d'échange additionnelles, comme des ailettes par exemple.

La cloison 74 est réalisée en un matériau favorisant les échanges thermiques, comme par exemple en matériau céramique.

Le matériau de la cloison 74, la géométrie de sa section et les formes en surface de la cloison 74 sont déterminés de manière à favoriser les échanges thermiques entre les flux d'air chaud et froid et réduire les dimensions de l'échangeur thermique 68.

Comme illustré en détails sur la figure 5, le premier tronçon de circuit 70 comprend une première entrée 70.1 et une première sortie 70.2 positionnée au-dessus de la première entrée 70.1, le flux d'air chaud circulant, vers le haut, de la première entrée 70.1 vers la première sortie 70.2.

Selon une configuration, la première entrée 70.1est positionnée au-dessous de la structure primaire 60 du mât et la première sortie 70.2 est positionnée au-dessus de la structure primaire 60 du mât.

Le dispositif d'échange thermique 66 comprend également un premier conduit 76 qui présente une première extrémité connectée à la première entrée 70.1, configuré pour prélever l'air chaud au niveau du moteur 54, plus particulièrement dans la zone « core » du moteur positionné dans le carter central 54.2 ; ainsi qu'un deuxième conduit 78 qui présente une première extrémité connectée à la première sortie 70.2, configuré pour acheminer l'air chaud refroidi vers au moins un équipement de l'aéronef utilisant de l'air chaud.

Selon une configuration, le premier conduit 76 présente, au niveau de sa première extrémité connectée à la première entrée 70.1, un premier coude 76.1 qui oriente le reste du premier conduit 76 vers l'avant. Le deuxième conduit 78 présente, au niveau de sa première extrémité connectée à la première sortie 70.2, un deuxième coude 78.1 qui oriente le reste du deuxième conduit 78 vers l'arrière.

Le deuxième tronçon de circuit 72 comprend une deuxième entrée 72.1 et une deuxième sortie 72.2, le flux d'air froid circulant de la deuxième entrée 72.1 vers la deuxième sortie 72.2.

Selon une caractéristique de l'invention, le flux d'air chaud circulant dans le premier tronçon de circuit 70 s'écoule à contre sens par rapport au flux d'air froid circulant dans le deuxième tronçon de circuit 72 pour améliorer les échanges thermiques entre les flux d'air chaud et froid.

Ainsi, la deuxième entrée 72.1 est positionnée au-dessus de la structure primaire 60 du mât et la deuxième sortie 72.2 est positionnée au-dessous de la structure primaire 60 du mât.

Selon un mode de réalisation, la première entrée 70.1 et la deuxième sortie 72.2 sont positionnées dans un même plan P1 perpendiculaire à l'axe A68 et positionné au-dessous de la structure primaire 60 du mât. La première sortie 70.2 et la deuxième entrée 72.1 sont positionnées dans un même plan P2 perpendiculaire à l'axe A68 et positionné au-dessus de la structure primaire 60 du mât.

Selon un mode de réalisation, l'échangeur thermique 68 se présente sous la forme d'un cylindre, compact, qui s'étend entre les plans P1 et P2.

Le dispositif d'échange thermique 66 comprend également un troisième conduit 80 qui présente une première extrémité connectée à la deuxième entrée 72.1, configuré pour prélever l'air froid dans le flux secondaire 55 ; ainsi qu'un quatrième conduit 82 qui présente une première extrémité connecté à la deuxième sortie 72.2, configuré pour refouler l'air froid dans le moteur 54, plus particulièrement vers la zone « core » du moteur 54 positionné dans le carter central 54.2.

Selon une configuration, le troisième conduit 80 comporte au niveau de sa deuxième extrémité une écope 84 qui présente une ouverture orientée vers l'avant pour qu'une partie du flux secondaire 55 pénètre naturellement dans l'écope 84. Le troisième conduit 80 présente, au niveau de sa première extrémité connectée à la deuxième entrée 72.1, un troisième coude 80.1 qui oriente le reste du troisième conduit 80 vers l'avant.

Comme illustré sur la figure 5, le deuxième conduit 78 traverse la paroi du troisième conduit 80 au niveau du rayon extérieur du coude 80.1 du troisième conduit 80.

Selon un mode de réalisation, l'écope 84 est positionnée au niveau du bord d'attaque de la bifurcation 64, au-dessus de la structure primaire 60.

Selon une configuration, le quatrième conduit 82 comporte au niveau de sa deuxième extrémité un orifice d'échappement 86 orienté vers l'arrière permettant d'orienter le flux d'air froid refoulé selon l'axe moteur afin qu'il contribue à la poussée du moteur 54. Le quatrième conduit 82 présente, au niveau de sa première extrémité connectée à la deuxième sortie 72.2, un quatrième coude 82.1 qui oriente le reste du quatrième conduit 82 vers l'arrière. Comme illustré sur la figure 5, le premier conduit 76 traverse la paroi du quatrième conduit 82 au niveau du rayon extérieur du coude 82.1 du quatrième conduit 82.

Selon un mode de réalisation, l'orifice d'échappement 86 est positionné au-dessous de la structure primaire 60.

Contrairement à l'art antérieur, le flux d'air froid est aspiré, via l'écope 84, au-dessus de la structure primaire 60 et refoulé, via l'orifice d'échappement 86, au-dessous de la structure primaire 60 ce qui permet d'obtenir, dans l'échangeur thermique 68, un flux d'air froid à contre-courant par rapport au flux d'air chaud.

Cependant, l'invention n'est pas limitée à ce mode de réalisation. Ainsi, les flux d'air chaud et froid peuvent circuler dans le même sens, le flux d'air froid étant aspiré au-dessous de la structure primaire 60 et refoulé au-dessus de la structure primaire 60.

Selon une autre caractéristique de l'invention, l'échangeur thermique 68 comprend un système de fixation 88 pour le relier à la structure primaire 60. Ainsi, contrairement à l'art antérieur, l'échangeur thermique 68 n'est pas supporté par la structure secondaire 62. Dès lors, la conception de cette structure secondaire 62 peut être simplifiée.

Selon un mode de réalisation visible sur la figure 7, le système de fixation 88 comprend une collerette extérieure 90 solidaire du deuxième tronçon de circuit 72, qui est configurée pour être plaquée contre une face supérieure de la structure primaire 60 ; ainsi que des fixations 92, comme par exemple des vis, pour solidariser ladite collerette extérieure 90 à la structure primaire 60. Bien entendu, l'invention n'est pas limitée à ce système de fixation pour relier l'échangeur thermique 68 à la structure primaire 60 du mât.

Selon l'invention, le dispositif d'échange thermique 66 comprend un système de régulation 94 configuré pour ajuster le débit du flux d'air froid.

Le système de régulation 94 est configuré pour ajuster le débit de l'air froid circulant entre le deuxième tronçon de circuit 72 et le premier tronçon de circuit 70.

Pour obtenir un dispositif d'échange thermique 66 compact, le système de régulation 94 est un système de régulation à diaphragme. Le système de régulation 94 est positionné au niveau du plan P2, soit au niveau de la deuxième entrée 72.1 du deuxième tronçon de circuit 72.

Le système de régulation 94 est configuré pour occuper :
- un état fermé, visible sur la figure 8A, dans lequel il obture totalement le deuxième tronçon de circuit 72, empêchant l'écoulement du flux d'air froid,
- un état totalement ouvert, visible sur la figure 8B, dans lequel il dégage totalement le deuxième tronçon de circuit 72, autorisant l'écoulement du flux d'air froid à un débit maximal, et de préférence
- au moins un état intermédiaire dans lequel il dégage partiellement le deuxième tronçon de circuit 72, autorisant l'écoulement du flux d'air froid à un débit plus ou moins important.

Le dispositif d'échange thermique 66 comprend une commande (non représentée) pour contrôler l'état du système de régulation 94.

Comme visible sur les figures 8A et 8B, le système de régulation 94 comprend une couronne 95, coaxiale à l'axe A68, et au moins deux secteurs de disque 96 mobiles par rapport à la couronne 95, selon une direction de déplacement, les secteurs de disque 96 étant configurés pour occuper :
- une position la plus rapprochée de l'axe A68, visible sur la figure 8A, dans laquelle les secteurs de disque 96 sont jointifs et obturent le deuxième tronçon de circuit 72 ce qui correspond à l'état fermé,
- une position la plus écartée de l'axe A68, visible sur la figure 8B, dans laquelle les secteurs de disque 96 sont espacés et dégagent totalement le deuxième tronçon de circuit 72 ce qui correspond à l'état ouvert, et de préférence,
- une position intermédiaire, entre les positions la plus rapprochée et la plus écartée, qui correspond à un des états intermédiaires.

Le mode de réalisation visible sur les figures 8A et 8B comprend six secteurs de disque 96 régulièrement répartis autour de l'axe A68, s'étendant chacun sur un secteur angulaire de l'ordre de 60°.

Le système de régulation 94 peut comprendre pour chaque secteur de disque 96, un système de guidage 98 configuré pour guider chaque secteur de disque 96 selon la direction radiale. Selon un mode de réalisation, le système de guidage 98 comprend, sur chaque secteur de disque 96, une lumière oblongue 100 orientée selon la direction de déplacement et, sur la couronne 95, des pions 102, un pour chaque secteur de disque 96, configuré pour se loger dans une des lumières oblongues 100. En variante, comme illustré sur les figures 8A et 8B, le système de guidage 98 comprend, sur la couronne 95, une lumière oblongue 100 orientée selon la direction de déplacement pour chaque secteur de disque 96 et, sur chaque secteur de disque 96, un pion 102 configuré pour se loger dans une des lumières oblongues 100.
Selon une première configuration, la direction de déplacement est radiale (perpendiculaire à l'axe A68) et les lumières oblongues 100 sont orientées radialement. Dans ce cas, la couronne 95 est fixe et le système de régulation 94 comprend une deuxième couronne mobile configurée pour pivoter autour de l'axe A68 et reliée aux secteurs de disque 96 de sorte que le pivotement de la deuxième couronne provoque un déplacement radial des secteurs de disque 96.

Selon une deuxième configuration, la direction de déplacement n'est pas radiale et les lumières oblongues 100 sont orientées selon une direction formant un angle non nul avec la direction radiale. Dans ce cas, la couronne 95 est mobile, le pivotement de la couronne 95 autour de l'axe A68 provoquant un déplacement radial des secteurs de disque 96. Bien entendu, l'invention n'est pas limitée à ces modes de réalisation pour le système de régulation 94.

Le dispositif d'échange thermique 66 de l'invention procure les avantages suivants : Le fait de prévoir un échangeur thermique 68 de type coaxial, sensiblement tubulaire, permet de pouvoir le placer, au moins partiellement, dans la structure primaire 60 (à la manière du conduit d'alimentation en air chaud de l'art antérieur). Ainsi, l'impact de son intégration sur les formes aérodynamiques du carénage de la structure secondaire 62 est limité.

En raison du positionnement de l'échangeur thermique 68 dans la structure primaire 60, le carénage de la structure secondaire 62 peut être positionné au plus près de la structure primaire et/ou l'espace dégagé entre la structure secondaire et la structure primaire peut être utilisé pour intégrer d'autres équipements.

Par ailleurs, le flux d'air froid étant rejeté dans la zone « core » du moteur 54, il contribue à augmenter la poussée du moteur.

Enfin, le dispositif d'échange thermique étant relié à la structure primaire 60 et non à la structure secondaire 62, la conception de cette dernière s'en trouve simplifiée.

## Revendications

1. Mât d'aéronef comprenant :
- Une structure primaire (60) configurée pour relier un moteur (54) d'aéronef et une voilure,
- Une structure secondaire (62) comportant un carénage aérodynamique configuré pour envelopper la structure primaire (60) à l'extérieur d'une nacelle (56) entourant le moteur (54),
- Une bifurcation (64) comportant un carénage aérodynamique configuré pour envelopper la structure primaire (60) dans un flux secondaire (55) canalisé entre la nacelle (56) et le moteur (54),
- Un dispositif d'échange thermique (66) comportant :
o un échangeur thermique (68) qui comprend un premier tronçon de circuit (70) canalisant un flux d'air chaud qui présente une première entrée (70.1) et une première sortie (70.2), ainsi qu'un deuxième tronçon de circuit (72) canalisant un flux d'air froid qui présente une deuxième entrée (72.1) et une deuxième sortie (72.2),
∘ un premier conduit (76) ayant une première extrémité connectée à la première entrée (70.1), configuré pour prélever le flux d'air chaud au niveau du moteur (54),
∘ un deuxième conduit (78), ayant une première extrémité connectée à la première sortie (70.2), configuré pour acheminer le flux d'air chaud refroidi vers au moins un équipement de l'aéronef,
les premier et deuxième tronçons de circuit (70, 72) de l'échangeur thermique (68) étant coaxiaux, les premier et deuxième tronçons de circuit (70, 72) étant séparés par au moins une cloison (74) formant une surface d'échange, et positionnés, au moins partiellement, dans la structure primaire (60) du mât, ladite cloison (74) étant en un matériau favorisant des échanges thermiques,
**caractérise en ce que** le premier tronçon de circuit (70) comprend une section avec une géométrie augmentant la surface d'échange de la cloison (74) et/ou la cloison (74) présente des surfaces d'échange additionnelles,
le dispositif d'échange thermique (66) comprenant en outre un système de régulation (94) à diaphragme configuré pour ajuster le débit du flux d'air froid,
le système de régulation (94) comprenant une couronne (95), coaxiale à un axe (A68) de l'échangeur thermique, et au moins deux secteurs de disque (96) mobiles par rapport à la couronne (95), les secteurs de disque (96) étant configurés pour occuper :
- une position la plus rapprochée de l'axe (A68), dans laquelle les secteurs de disque (96) sont jointifs et obturent le deuxième tronçon de circuit (72), empêchant l'écoulement du flux d'air froid,
- une position la plus écartée de l'axe (A68), dans laquelle les secteurs de disque (96) sont espacés et dégagent totalement le deuxième tronçon de circuit (72), autorisant l'écoulement du flux d'air froid à un débit maximal, et de préférence,
- une position intermédiaire, entre les positions la plus rapprochée et la plus écartée, autorisant l'écoulement du flux d'air froid à un débit plus ou moins important.

2. Mât d'aéronef selon la revendication 1, **caractérisé en ce que** le premier tronçon de circuit (70) canalisant l'air chaud est positionné à l'intérieur du deuxième tronçon de circuit (72) canalisant l'air froid.

3. Mât d'aéronef selon l'une des revendications précédentes, **caractérisé en ce que** la première entrée (70.1) et la première sortie (70.2) sont positionnées respectivement au-dessous et au-dessus de la structure primaire (60) du mât, et **en ce que** la deuxième entrée (72.1) et la deuxième sortie (72.2) sont positionnées respectivement au-dessus et au-dessous de la structure primaire (60) du mât pour que le flux d'air chaud circulant dans le premier tronçon de circuit (70) s'écoule à contre sens par rapport au flux d'air froid circulant dans le deuxième tronçon de circuit (72).

4. Mât d'aéronef selon l'une des revendications précédentes, **caractérisé en ce que** le dispositif d'échange thermique (66) comprend un troisième conduit (80) qui présente une première extrémité connectée à la deuxième entrée (72.1) et, au niveau d'une deuxième extrémité, une écope (84) ouverte vers l'avant pour qu'une partie du flux secondaire (55) pénètre naturellement dans l'écope (84) ainsi qu'un quatrième conduit (82) qui présente une première extrémité connectée à la deuxième sortie (72.2), configuré pour refouler l'air froid dans le moteur (54).

5. Mât d'aéronef selon la revendication précédente, **caractérisé en ce que** l'écope (84) est positionnée au niveau d'un bord d'attaque de la bifurcation (64), au-dessus de la structure primaire (60).

6. Mât d'aéronef selon la revendication 4 ou 5, **caractérisé en ce que** le premier conduit (76) présente, au niveau de sa première extrémité connectée à la première entrée (70.1) de l'échangeur thermique (68), un premier coude (76.1) qui oriente le reste du premier conduit (76) vers l'avant, **en ce que** le deuxième conduit (78) présente, au niveau de sa première extrémité connectée à la première sortie (70.2) de l'échangeur thermique (68), un deuxième coude (78.1) qui oriente le reste du deuxième conduit (78) vers l'arrière, **en ce que** le troisième conduit (80) présente, au niveau de sa première extrémité connectée à la deuxième entrée (72.1) de l'échangeur thermique (68), un troisième coude (80.1) qui oriente le reste du troisième conduit (80) vers l'avant, le deuxième conduit (78) traversant la paroi du troisième conduit (80) au niveau du rayon extérieur du troisième coude (80.1) et **en ce que** le quatrième conduit (82) présente, au niveau de sa première extrémité connectée à la deuxième sortie (72.2) de l'échangeur thermique (68), un quatrième coude (82.1) qui oriente le reste du quatrième conduit (82) vers l'arrière, le premier conduit (76) traversant la paroi du quatrième conduit (84) au niveau du rayon extérieur du quatrième coude (82.1).

7. Mât d'aéronef selon l'une des revendications précédentes, **caractérisé en ce que** l'échangeur thermique (68) comprend un système de fixation (88) pour le relier à la structure primaire (60).

8. Aéronef comprenant un mât selon l'une des revendications précédentes.

## Patentansprüche

1. Flugzeugpylon, der umfasst:
- eine Primärstruktur (60), die dazu ausgestaltet ist, ein Flugzeugtriebwerk (54) und einen Tragflügel zu verbinden,
- eine Sekundärstruktur (62), die eine aerodynamische Verkleidung beinhaltet, die dazu ausgestaltet ist, die Primärstruktur (60) außerhalb einer das Triebwerk (54) umgebenden Gondel (56) zu umhüllen,
- eine Verzweigung (64), die eine aerodynamische Verkleidung beinhaltet, die dazu ausgestaltet ist, die Primärstruktur (60) in einem kanalisierten Sekundärstrom (55) zwischen der Gondel (56) und dem Triebwerk (54) zu umhüllen,
- eine Wärmetauschvorrichtung (66), die beinhaltet:
o einen Wärmetauscher (68), der einen ersten einen Warmluftstrom kanalisierenden Kreislaufabschnitt (70), der einen ersten Einlass (70.1) und einen ersten Auslass (70.2) aufweist, sowie einen zweiten einen Kaltluftstrom kanalisierenden Kreislaufabschnitt (72), der einen zweiten Einlass (72.1) und einen zweiten Auslass (72.2) aufweist, umfasst,
o eine erste Leitung (76) mit einem ersten mit dem ersten Einlass verbundenen Ende (70.1), die dazu ausgestaltet ist, den Warmluftstrom am Triebwerk (54) zu entnehmen,
o eine zweite Leitung (78) mit einem ersten mit dem ersten Auslass verbundenen Ende (70.2), die dazu ausgestaltet ist, den gekühlten Warmluftstrom zu mindestens einer Ausrüstung des Flugzeugs zu lenken,
wobei der erste und der zweite Kreislaufabschnitt (70, 72) des Wärmetauschers (68) koaxial sind, wobei der erste und der zweite Kreislaufabschnitt (70, 72) durch mindestens eine Trennwand (74), die eine Tauschfläche bildet, getrennt sind und zumindest teilweise in der Primärstruktur (60) des Pylonen angeordnet sind, wobei die Trennwand (74) aus einem Werkstoff ist, der Wärmeaustausche begünstigt,
**dadurch gekennzeichnet, dass** der erste Kreislaufabschnitt (70) einen Querschnitt mit einer Geometrie umfasst, welche die Tauschfläche der Trennwand (74) vergrößert, und/oder die Trennwand (74) zusätzliche Tauschflächen aufweist, wobei die Wärmetauschvorrichtung (66) ferner ein Regulierungssystem (94) mit Membran umfasst, das dazu ausgestaltet ist, den Volumenstrom des Kaltluftstroms anzupassen, wobei das Regulierungssystem (94) einen koaxial zu einer Achse (A68) des Wärmetauschers verlaufenden Kranz (95) und mindestens zwei in Bezug auf den Kranz (95) bewegliche Scheibensegmente (96) umfasst, wobei die Scheibensegmente (96) dazu ausgestaltet sind, Folgendes einzunehmen:
- eine der Achse (A68) am weitesten angenäherte Position, in der die Scheibensegmente (96) aneinander angrenzen und den zweiten Kreislaufabschnitt (72) verschließen, wodurch das Strömen des Kaltluftstroms verhindert wird,
- eine von der Achse (A68) am weitesten beabstandete Position, in der die Scheibensegmente (96) beabstandet sind und den zweiten Kreislaufabschnitt (72) vollständig freigeben, wodurch das Strömen des Kaltluftstroms mit einem maximalen Volumenstrom zugelassen wird, und bevorzugt
- eine Zwischenposition zwischen der am weitesten angenäherten und der am weitesten beabstandeten Position, die das Strömen des Kaltluftstroms mit einem mehr oder weniger großen Volumenstrom zulässt.

2. Flugzeugpylon nach Anspruch 1, **dadurch gekennzeichnet, dass** der erste die Warmluft kanalisierende Kreislaufabschnitt (70) im Innern des zweiten die Kaltluft kanalisierenden Kreislaufabschnitts (72) angeordnet ist.

3. Flugzeugpylon nach einem der vorhergehenden Ansprüche, **dadurch gekennzeichnet, dass** der erste Einlass (70.1) und der erste Auslass (70.2) unter beziehungsweise über der Primärstruktur (60) des Pylonen angeordnet sind und dass der zweite Einlass (72.1) und der zweite Auslass (72.2) über beziehungsweise unter der Primärstruktur (60) des Pylonen angeordnet sind, damit der im ersten Kreislaufabschnitt (70) zirkulierende Warmluftstrom im Gegenstrom zu dem im zweiten Kreislaufabschnitt (72) zirkulierenden Kaltluftstrom strömt.

4. Flugzeugpylon nach einem der vorhergehenden Ansprüche, **dadurch gekennzeichnet, dass** die Wärmetauschvorrichtung (66) eine dritte Leitung (80) umfasst, die ein erstes mit dem zweiten Einlass (72.1) verbundenes Ende und an einem zweiten Ende eine nach vorn offene Haube (84) aufweist, damit ein Teil des Sekundärstroms (55) auf natürliche Weise in die Haube (84) eindringt, sowie eine vierte Leitung (82), die ein erstes mit dem zweiten Auslass (72.2) verbundenes Ende aufweist und dazu ausgestaltet ist, die Kaltluft in das Triebwerk (54) zu verdrängen.

5. Flugzeugpylon nach dem vorhergehenden Anspruch, **dadurch gekennzeichnet, dass** die Haube (84) an einer Anströmkante der Verzweigung (64) über der Primärstruktur (60) angeordnet ist.

6. Flugzeugpylon nach Anspruch 4 oder 5, **dadurch gekennzeichnet, dass** die erste Leitung (76) an ihrem ersten mit dem ersten Einlass (70.1) des Wärmetauschers (68) verbundenen Ende einen ersten Bogen (76.1) aufweist, der den Rest der ersten Leitung (76) nach vorn ausrichtet, dass die zweite Leitung (78) an ihrem ersten mit dem ersten Auslass (70.2) des Wärmetauschers (68) verbundenen Ende einen zweiten Bogen (78.1) aufweist, der den Rest der zweiten Leitung (78) nach hinten ausrichtet, dass die dritte Leitung (80) an ihrem ersten mit dem zweiten Einlass (72.1) des Wärmetauschers (68) verbundenen Ende einen dritten Bogen (80.1) aufweist, der den Rest der dritten Leitung (80) nach vorn ausrichtet, wobei die zweite Leitung (78) die Wand der dritten Leitung (80) am Außenradius des dritten Bogens (80.1) durchquert, und dass die vierte Leitung (82) an ihrem ersten mit dem zweiten Auslass (72.2) des Wärmetauschers (68) verbundenen Ende einen vierten Bogen (82.1) aufweist, der den Rest der vierten Leitung (82) nach hinten ausrichtet, wobei die erste Leitung (76) die Wand der vierten Leitung (84) am Außenradius des vierten Bogens (82.1) durchquert.

7. Flugzeugpylon nach einem der vorhergehenden Ansprüche, **dadurch gekennzeichnet, dass** der Wärmetauscher (68) ein Befestigungssystem (88) umfasst, um ihn an der Primärstruktur (60) zu befestigen.

8. Flugzeug mit einem Pylonen nach einem der vorhergehenden Ansprüche.

## Claims

1. Aircraft pylon comprising:
- a primary structure (60) configured to connect an aircraft engine (54) and a wind structure,
- a secondary structure (62) comprising an aerodynamic fairing configured to envelope the primary structure (60) on the outside of a nacelle (56) surrounding the engine (54),
- a bifurcation (64) comprising an aerodynamic fairing configured to envelope the primary structure (60) in a secondary flow (55) ducted between the nacelle (56) and the engine (54),
- a heat exchange device (66) comprising:
**∘** a heat exchanger (68) which comprises a first circuit portion (70) ducting a flow of hot air, which has a first inlet (70.1) and a first outlet (70.2), and a second circuit portion (72) ducting a flow of cold air, which has a second inlet (72.1) and a second outlet (72.2),
∘ a first duct (76) which has a first end connected to the first inlet (70.1) and is configured to tap the flow of hot air off the engine (54),
∘ a second duct (78) which has a first end connected to the first outlet (70.2) and is configured to duct the flow of cooled hot air towards at least one item of aircraft equipment,
the first and second circuit portions (70, 72) of the heat exchanger (68) being coaxial, the first and second circuit portions (70, 72) separated by at least one partition (74) that forms an exchange surface, and positioned, at least partially, in the primary structure (60) of the pylon the said partition (74) being made of a material promoting heat exchange, **characterized in that** the first circuit portion (70) comprises a cross section with a geometry increasing the exchange surface area of the partition (74) and/or the partition (74) has additional heat exchange surfaces the heat exchange device (66) further comprising an orifice-plate regulating system (94) configured to adjust the flow rate of the flow of cold air the regulating system (94) comprising a ring (95), coaxial with an axis (A68) of the heat exchanger, and at least two disc sectors (96) able to move with respect to the ring (95), the disc sectors (96) being configured to occupy:
- a position closest to the axis (A68), in which the disc sectors (96) are touching and close off the second circuit portion (72), preventing the cold air flow from flowing,
- a position furthest from the axis (A68), in which the disc sectors (96) are spaced apart and completely uncover the second circuit portion (72), allowing the cold air flow to flow at a maximum flow rate, and, for preference,
- an intermediate position, between the closest and the furthest positions, allowing the cold air flow to flow at a greater or lesser flow rate.

2. Aircraft pylon according to Claim 1, **characterized in that** the first circuit portion (70) ducting the hot air is positioned inside the second circuit portion (72) ducting the cold air.

3. Aircraft pylon according to either of the preceding claims, **characterized in that** the first inlet (70.1) and the first outlet (70.2) are positioned respectively below and above the primary structure (60) of the pylon, and **in that** the second inlet (72.1) and the second outlet (72.2) are positioned respectively above and below the primary structure (60) of the pylon so that the flow of hot air circulating through the first circuit portion (70) flows countercurrentwise with respect to the flow of cold air circulating in the second circuit portion (72) .

4. Aircraft pylon according to one of the preceding claims, **characterized in that** the heat exchange device (66) comprises a third duct (80) which has a first end connected to the second inlet (72.1) and, at a second end, has a scoop (84) that is open towards the front so that part of the secondary flow (55) naturally enters the scoop (84), and a fourth duct (82) which has a first end connected to the second outlet (72.2) and is configured to deliver the cold air into the engine (54).

5. Aircraft pylon according to the preceding claim, **characterized in that** the scoop (84) is positioned at a leading edge of the bifurcation (64), above the primary structure (60).

6. Aircraft pylon according to Claim 4 or 5, **characterized in that** the first duct (76) has, at its first end connected to the first inlet (70.1) of the heat exchanger (68), a first elbow (76.1) which directs the rest of the first duct (76) towards the front, **in that** the second duct (78) has, at its first end connected to the first outlet (70.2) of the heat exchanger (68), a second elbow (78.1) which directs the rest of the second duct (78) towards the rear, **in that** the third duct (80) has, at its first end connected to the second inlet (72.1) of the heat exchanger (68), a third elbow (80.1) which directs the rest of the third duct (80) towards the front, the second duct (78) passing through the wall of the third duct (80) on the external radius of the third elbow (80.1) and **in that** the fourth duct (82) has, at its first end connected to the second outlet (72.2) of the heat exchanger (68), a fourth elbow (82.1) which directs the rest of the fourth duct (82) towards the rear, the first duct (76) passing through the wall of the fourth duct (84) on the outside radius of the fourth elbow (82.1).

7. Aircraft pylon according to one of the preceding claims, **characterized in that** the heat exchanger (68) comprises a fixing system (88) for connecting it to the primary structure (60).

8. Aircraft comprising a pylon according to one of the preceding claims.
